(19) **Europäisches Patentamt European Patent Office Office européen des brevets**

(11) **EP 1 416 184 B1**

(12) **EUROPEAN PATENT SPECIFICATION**

(45) Date of publication and mention
of the grant of the patent:
**26.05.2010   Bulletin 2010/21**

(51) Int Cl.:
***F16D 69/02*** (2006.01)

(21) Application number: **02745951.0**

(22) Date of filing: **11.07.2002**

(86) International application number:
**PCT/JP2002/007039**

(87) International publication number:
**WO 2003/006844 (23.01.2003 Gazette 2003/04)**

(54) **BRAKE MATERIAL**

BREMSMATERIAL

MATERIAU DE FREIN

(84) Designated Contracting States:
**DE**

(30) Priority:   **12.07.2001   JP 2001211586**

(43) Date of publication of application:
**06.05.2004   Bulletin 2004/19**

(73) Proprietor: **NGK Insulators, Ltd.
Nagoya-City, Aichi Pref.  467-8530 (JP)**

(72) Inventors:
 • **HANZAWA, Shigeru,
c/o NGK INSULATORS, LTD.
Nagoya-shi, Aichi 467-8530 (JP)**

 • **HASHIMOTO, Naoki,
c/o NGK INSULATORS, LTD.
Nagoya-shi, Aichi 467-8530 (JP)**

(74) Representative: **TBK-Patent
Bavariaring 4-6
80336 München (DE)**

(56) References cited:
EP-A- 0 931 954          EP-A2- 0 926 111
EP-A2- 0 985 647         EP-A2- 0 985 647
EP-A2- 1 028 098         JP-A- 2000 095 586
JP-A- 2000 095 586       US-A- 5 454 990

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a brake material which has light weight, a high wear resistance, a high oxidation resistance etc. More particularly, the invention relates to a brake material which is mounted in conjunction with a speed control device used when a large automobile or the like, or a large transport machine such as an aircraft is stopped or a speed is controlled.

Background Art

As a brake pad or a disk used in a braking device which is light in weight, and high in wear resistance etc., and mounted on a large automobile or the like, or a large transport machine such as an aircraft, a carbon-fiber-in composite (may also be referred to as a C/C composite, hereinafter) is now in wide use which is a material of a very high coefficient of friction at a high temperature, light weight and nonoccurrence of thermal deformation.

In such a large transport machine, it may be necessary to repeat braking under an excessive load for an emergency stop, braking for a long time, highly frequent braking etc. In the case of the braking device which uses the C/C composite as a friction material, the friction material is exposed under a high temperature in air for a long time. Thus, since the friction material is basically made mainly of a carbon fiber which is easily burned at a high temperature, it has been reported that under such conditions, there is a case in which the friction material not only reacts with oxygen to be greatly worn but also emits smoke to reach the brink of a major accident. However, in terms of a high friction force under the high temperature, and performance such as flexibility required at the time of mounting on the brake, no alternative raw materials have been discovered thus far.

Under these circumstances, the inventors have presented a brake member in JP-A-2000-81062, EP-A-0 926 111 and EP-A2-0 985 647 which is characterized by being made of a fiber composite material comprising a matrix made of an Si-SiC base material having performance higher than that of the C/C composite at a coefficient of dynamic friction while maintaining good points such as a high shock resistance and light weight that the C/C composite which is a composite carbon fiber has.

According to these documents, the C/C composite to be used for the fiber composite material may contain one or more substances selected from the group consisting of boron nitride, boron, copper, bismuth, titanium, chromium, tungsten, and molybdenum.

Additionally, the inventors have presented a brake pad or a disk, and a brake constituted of the pad in JP-A-2002-257168, the brake pad or the disk being manufactured by arranging composite members each having a high wear resistance and containing at least silicon carbide, and a silicon metal permitted to be contained if desired, at a predetermined rate on a surface of a C/C composite which is a composite carbon fiber or a compact manufactured by forming the C/C composite in a desired shape, as composite materials which have design performance in accordance with purposes, modes of use etc., in order to use more inexpensively available base materials and to prepare an assortment of products for enabling selection of a product which can exhibit desired performance from a wider group of products in accordance with a purpose, a mode of use etc.

The brake material of the aforementioned presentation is satisfactory in terms of braking. However, in terms of a wear resistance and, especially, at a high temperature which reaches even 1200°C under emergency stop conditions of an aircraft or the like, a sufficient wear resistance cannot be always exhibited and, accordingly, it has been discovered that sufficient durability cannot be provided. Especially, in an aircraft industry, a longer durable period of each component is requested, and the brake material is no exception. For example, even in a commercial aircraft, landing of 3000 times must be sufficiently carried out at least under normal conditions. In this regard, market needs cannot be always met.

On the other hand, Hanzawa or another who is one of the inventors of the present invention has presented a composite material in JP-A-2000-095586, in which a so-called C/C composite made of a laminated body is impregnated with a metal such as copper, and sliding performance is high. In this case, however, in addition to use as a heat sink which uses original properties of copper, i.e., thermal conductivity, sliding performance naturally owned by the copper is used, and use as a brake material is not considered at all.

Disclosure of the Invention

The present invention has been made with the foregoing current situations in mind, and objects of the invention are to provide a brake material which comprises a coefficient of dynamic friction sufficient to exhibit braking performance necessary as a brake material, and exhibits a wear resistance at least equal to or higher than that of the conventionally used C/C composite even under high temperature conditions.

As a result of various studies conducted in order to achieve the objects, the inventors have discovered that a brake material characterized by comprising a C/C composite obtained by impregnating a compact manufactured by a C/C composite which is a composite carbon fiber or forming the C/C composite in a desired shape with melted copper, and a matrix comprising a metal containing a desired amount of copper with which an aperture part between fibers of the C/C composite is impregnated, and having a coefficient of dynamic friction of at least 0.01 can achieve the object. Accordingly, the present invention has been completed.

That is, according to the present invention, there is claimed the use of a specific material in a braking device.

Brief Description of the Drawings

FIG. 1 is a graph showing a result of a performance test of a brake material of a comparative example which contains a C/C composite and Si-SiC;
FIG. 2 is a graph showing an example of a performance test result of a brake material of the present invention; and
FIG. 3 is a graph showing another example of a performance test result of the brake material of the present invention.

Best Mode for Carrying out the Invention

The present invention relates to a brake material comprising a C/C composite as a base material and a matrix comprising a metal containing a desired amount of copper with which an aperture part between fibers of the C/C composite is impregnated, characterized in that the brake material has a coefficient of dynamic friction of at least 0.01. According to the present invention, the C/C composite is used as the base material. However, there is no particular limitation as long as the base material is a C/C composite. Normally, materials called C/C composites can be used irrespective of preparation methods, origins or the like. For example, needless to say, a C/C composite of a laminated form manufactured by a method described in JP-A-02-80639, or a so-called general purpose C/C composite used for various purposes may be used.

For the copper of the matrix, metal copper normally used for industrial purposes may be used and, for example, pure copper or the like is suitably used. In the case of containing a metal other than copper, its inclusion is permissible as long as no considerable inconvenience is given to braking. Normally, however, if the amount exceeds 50%, the metal may be melted and broken loose to give an influence during a braking operation, and thus metal copper of purity as high as possible is preferably used.

In the brake material of the present invention, a coefficient of dynamic friction is at least 0.01 at a normal temperature, preferably 0.01 to 0.4, and more preferably about 0.1 to 0.4. Additionally, a wear amount is preferably 20.0 $mm^3/(N \cdot km)$ or lower when a test is conducted by pressing a test piece of a predetermined size at a pressing force of 686 N (70 kgf), preferably 10.0 $mm^3/(N \cdot km)$ or lower, more preferably in a range of 0.0 to 0.3 $mm^3/(N \cdot km)$.

Needless to say, the compact includes a so-called sintered body obtained by forming a C/C composite in a predetermined shape and then sintering it at a predetermined temperature. In the manufacturing of the brake material of the present invention, the brake material is manufactured in such a manner that a base material or a compact made of the base material is impregnated with a desired amount of metal copper, i.e., so that a coefficient of dynamic friction of the obtained brake material can become at least 0.01, preferably 0.01 to 0.4, more preferably about 0.1 to 0.4 by sintering, then sintered, and processed into a desired size and shape as occasion demands. In this case, in order to set design performance of the brake material in a desired range, it is preferable to use a coefficient of dynamic friction in which the amount of an aperture before the impregnation of the C/C composite as the base material is about 0.5% to 20 % by volume.

The amount of metal copper which is melted and with which the C/C composite as the base material is impregnated must occupy a range of about 15% to about 60% by mass of the entire brake material. Less than about 15%, a sufficient coefficient of dynamic friction necessary for brake control of an aircraft cannot be achieved. On the other hand, even if it exceeds about 60%, no big increase in coefficient of dynamic friction can be expected. It is rather unfavorable because of adverse influences such as a weight increase of the brake material, and a reduction in fuel flying distance per unit.

The impregnation with the metal copper may be normally carried out by a method described in JP-A-2000-95586. Thus, contents of the publication are hereby cited for reference.

Just in case, an outline is given as the manufacturing method of the brake material of the present invention. For example, a laminated body of yarns made of carbon fibers prepared by the method described in JP-A-02-80639 is pressurized and sintered to obtain a sintered body of a desired amount of an aperture, and this compact is impregnated with metal copper. Needless to say, a general purpose C/C composite may be used. Apparently, however, the amount of an aperture must be in a range of about 0.5% to 25% by volume. As such a general purpose C/C composite, AC200 by Across Co., Ltd., CCM190C by Nippon Carbon Co., Ltd., etc., can be cited.

Regarding the impregnation with copper, the sintered body and a metal containing at least copper may be heated in a state of no contact with each other, both may be brought into contact with each other to quickly apply a high pressure at a stage when a predetermined temperature is reached, the sintered body may be impregnated with the metal, and then at least the sintered body impregnated with the metal may be cooled to a room temperature. Needless to say, since reactivity of the metal copper with the carbon component of the base material is extremely low by nature, there will be no problem even if the copper and the base material are heated in contact with each other to melt the copper.

Thus, by heating the metal copper for the impregnation to the predetermined temperature while the metal copper are not in contact with the sintered body of the base material, bringing both into contact with each other and applying a pressure immediately after the melting, and quickly cooling the sintered body after the impregnation, it is possible to easily impregnate the sintered body with the metal copper which is generally considered difficult. Moreover, an impregnation rate of the sintered body with the metal copper can be set in a desired range and, as a result, it is possible to obtain a brake material having a desired coefficient of dynamic friction.

There is no particular limitation on the impregnation step. The sintered body may be impregnated with the melted metal by putting the sintered body and the metal copper in the same container, arranging the metal copper on the lower side of the container, and then setting a negative pressure or a normal pressure in the container. Alternatively, the sintered body may be impregnated with the melted metal by heating the metal copper to be melted, rotating the container at a stage when the melted metal copper reaches the predetermined temperature, and impregnating the sintered body with the melted metal copper in the container.

During the impregnation, an applied pressure is 0.98 MPa (10 kgf/cm$^2$) or higher to 98 MPa (1000 kgf/cm$^2$) or lower, preferably 4.9 MPa (50 kgf/cm$^2$), or higher to 19.6 MPa (200 kgf/cm$^2$) or lower, more preferably 9.8 MPa (100 kgf/cm$^2$), or higher to 14.7 MPa (150 kgf/cm$^2$) or lower. In this case, time of the pressure application is 10 sec., or higher to 30 min., or lower, preferably 2 min., or higher to 10 min., or lower.

The predetermined temperature is a temperature higher than a melting point of the metal copper for the impregnation by 10°C to 250°C, preferably a temperature higher than the melting point by 50°C to 200°C, i.e., 1100°C to 1350°C, preferably 1150°C to 1350°C. In this case, the heating of the metal with which the sintered body is impregnated is preferably carried out in vacuum of 0.01 HPa or lower.

The cooling step may have a step of rotating the container to separate the impregnated sintered body from a residual melted metal for nonimpregnation, and a step of removing a gas for the impregnation from the container, and quickly introducing a cooling gas to cool the inside of the container. Alternatively, it may have a step of rotating the container to separate the impregnated sintered body from the residual melted metal for nonimpregnation, and a step of bringing the container into contact with a cooling metal to cool the inside of the container.

A cooling speed in the cooling step is preferably -400°C/hr or higher from the temperature of the impregnation time to 800°C, more preferably -800°C/hr or higher.

The brake material of the present invention thus manufactured has high tenacity, a high shock resistance and high hardness because the coefficient of dynamic friction at a normal temperature is at least 0.01 which is a value necessary for brake control of an aircraft or the like, and the base material is the C/C composite. Thus, while maintaining characteristics of the conventionally used C/C composite, it is possible to overcome a drawback of the C/C composite, i.e., a low high-temperature wear resistance.

Furthermore, since the C/C composite is the base material, the brake material is light in weight, even its mounting on a large transport machine has no substantial influence on fuel consumption, and the brake material can meet an energy saving requirement without any energy consumption problems.

The metal copper is partially exposed on a surface of the brake material of the present invention. During braking, because of friction heat, the copper may be partially melted.

Examples

Next, the present invention will be described more in detail based on an example and a comparative example. However, the invention is not limited to these examples.

Characteristics of brake materials obtained in the examples were evaluated by the following method.

(Method for evaluating coefficient of dynamic friction and wear amount)

Test pieces of 42 mm square and 4 mm, 8 mm in thickness, and a test piece for a disk of an outer diameter 36 mm, an inner diameter 24 mm and a thickness 8 mm were prepared, these were superposed on each other to be set on fixtures, a load Fp (N) was applied so as to set surface pressures to 1.2 MPa and 1.9 MPa, both test pieces were rotated by a number of rotations 200 rpm for 10 min., and by 400 rpm for 5 min., to be pressed to each other, and a friction force Fs (N) at the time was measured. A value of a coefficient of dynamic friction was calculated by the following equation. For a wear amount, a mass Wa (mg) of the disk test piece before the test and a mass Wb (mg) after the test were measured and, based on these and a test piece density ρ (g/cm$^3$), a wear amount V (mm$^3$) was calculated by the following equation.

$$\texttt{Coefficient of dynamic friction } \mu\texttt{=Fs/Fp}$$

$$\texttt{Wear amount } V\texttt{=(Wa-Wb)/}\rho$$

Test conditions were set by using brake control conditions of an aircraft as models. That is, in the case of the aircraft, a surface pressure between brake materials is 1.5 to 2.0 MPa during brake control, and the aircraft lands at 130 km/hr to 170 km/hr, and stops in 20 sec. When these conditions were extrapolated, a sliding distance SD was obtained by assuming that a tire diameter was 2 m, a brake material diameter was 500 mm, and a force was continuously applied to a tire rotated at 150 km/hr for 20 sec. That is, the sliding distance can be given by the following equation.

$$\texttt{Sliding distance } SD\texttt{=150×(20/(60×60))÷4}$$

$$\texttt{=0.208 km}$$

In a center of a radius of the disk test piece, a sliding distance becomes as follows if the test piece is slid at a number of rotations 200 rpm for 10 min.

$$\texttt{Sliding distance } SD\texttt{=2×}\pi\texttt{×0.015×200×10}$$

$$\texttt{=0.188 km}$$

The aforementioned conditions were employed by setting a similar sliding distance.

In the case of the test piece of the thickness 4 mm, a temperature became so high that friction powders were burned. Thus, as conditions for setting a temperature of the test piece to 660°C to 700°C to approach a temperature during normal brake control of the aircraft, a thickness of the test piece was doubled to 8 mm, and a test was conducted under conditions more similar to actual conditions.

(Example)

Based on the method described in JP-A-02-80639, prepreg sheets in which carbon fibers pulled in one direction to be aligned were impregnated with a phenol resin were laminated so as to set the carbon fibers orthogonal to each other, and the resin was cured by hot pressing at 180°C and 10 kg/cm$^2$. Then, it was sintered in nitrogen at 2000°C to obtain a sintered body of a C/C composite having a density of 1.60 g/cm$^3$ and an amount of an aperture of 15%.

In accordance with the method described in JP-A-2000-95586, the sintered body was impregnated with melted metal by a step of putting the sintered body in the same container as that for metal copper, arranging the metal copper on the lower side of the container, then heating the metal copper to be melted, rotating the container at a stage when the melted metal copper reached a predetermined temperature, and impregnating the sintered body with the melted metal copper in the container. Other conditions were set in accordance with those described in the publication. In order to set a coefficient of dynamic friction in a desired range, the amount of the used metal copper was selected to be 49% by mass.

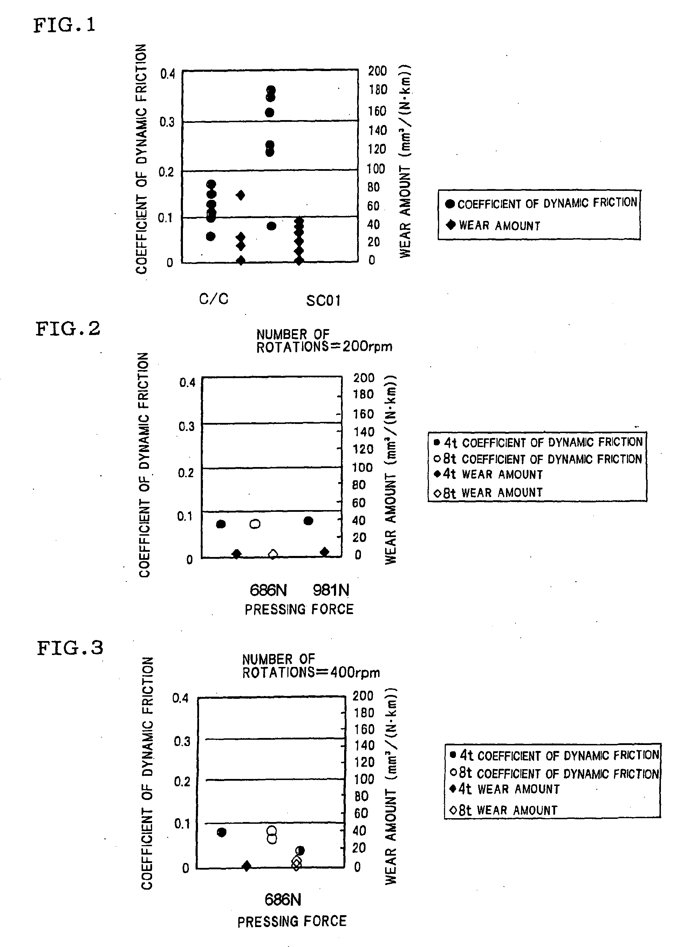

From the obtained brake material, test pieces of 42 mm square and 4 mm and 8 mm in thickness, and a disk test piece of an outer diameter of 36 mm, an inner diameter of 24 mm and a thickness of 8 mm were cut out. These test pieces were used to measure coefficients of dynamic friction and wear amounts by the aforementioned measuring method, and results thereof are shown in FIGS. 2 and 3. FIG. 2 shows a result of measurement at a number of rotations 200 rpm and 10 min. after pressing forces of 686 N (70 kgf) and 981 N (100 kgf) were applied. FIG. 3 shows a result of measurement at a number of rotations 400 rpm and 5 min. after a pressing force of 686 N (70 kgf) was applied.

For comparison, a test piece was similarly cut out from the sintered body itself to be used for a test. This is indicated by C/C in FIG. 1. Additionally, a measured value indicates a value at a number of rotations 200 rpm and 10 min. after a pressing force of 686 N (70 kgf) was applied.

(Comparative Example)

A fiber composite material in which a matrix layer made of an Si-SiC base material was arranged was manufactured by using a disk C/C composite having an outer diameter of 300 mm, an inner diameter of 150 mm, and a thickness of 20 mm as a base material, and a brake member was manufactured by using this.

The C/C composite was prepared by the method described in JP-A-2000-81062, i.e., the following method.

Prepreg sheets in which carbon fibers pulled in one direction to be aligned were impregnated with a phenol resin were laminated so as to set the carbon fibers orthogonal to each other, and the resin was cured by hot pressing at 180°C and 10 kg/cm$^2$. Then, it was sintered in nitrogen at 2000°C to obtain a C/C composite of a density 1.0 g/cm$^3$, and an open porosity 50%.

Then, the obtained C/C composite was installed in a carbon crucible filled with Si powders of purity 99.8% and an average particle diameter 1 mm. Then, the carbon crucible was moved in a sintering furnace. Processing was carried out by setting a temperature to 1300°C in the sintering furnace, an argon gas flow rate to 20 NL/min. as an inactive gas, a sintering furnace inner pressure to 1 hPa, and holding time to 4 hours. Then, the temperature in the furnace was increased to 1600°C while the pressure in the sintering furnace was maintained, and the C/C composite was impregnated with Si to obtain a composite material.

From the obtained brake material, as in the case of the manufacturing example, test pieces of 42 mm square and 4 mm and 8 mm in thickness, and a disk test piece of an outer diameter of 36 mm, an inner diameter of 24 mm and a thickness of 8 mm were cut out. These test pieces were used to measure coefficients of dynamic friction and wear amounts by the aforementioned measuring method, and results thereof are shown in FIG. 1 together with the C/C composite. This is indicated by SC01 in FIG. 1. Data of FIG. 1 shows a result of cutting out test pieces from seven samples manufactured under the same conditions, and conducting a test for these test pieces.

As apparent from FIGS. 1 to 3, the brake material of the present invention exhibits a stable numerical value of a coefficient of dynamic friction compared with the brake member previously disclosed in JP-A-2000-81062 by the inventors, and the wear amount is considerably smaller compared with the C/C composite and the brake material of the comparative example. Thus, it can be understood that the brake material of the present invention has excellent characteristics in practicality, especially in durability. Industrial Applicability

It is apparent that the brake material of the present invention is an extremely promising brake material because of a practicable coefficient of dynamic friction and a small wear amount. Since the C/C component is the base material, weight is light, and energy losses are small to meet the energy saving requirement. Moreover, since the base material is the C/C composite, the brake material has high tenacity, a high shock resistance and high hardness.

Therefore, as apparent from the foregoing results, the brake material of the present invention is an extremely promising material as a brake member for a braking device of a large transport machine such as an aircraft.

**Claims**

1. Use of a material comprising a C/C composite having apertures impregnated with metal copper as a brake member in a braking device for an automobile or a transport machine, wherein the amount of apertures is 0.5% to 25% by volume, and the amount of metal copper occupies 15% to 60% by mass of the entire material.

2. Use according to claim 1, wherein the C/C composite is constituted of a yarn aggregate in which yarns containing at least bundles of carbon fibers and carbon components other than carbon fibers are three-dimensionally combined, and these yarns are integrated so as not to be separated from one another.

**Patentansprüche**

1. Verwendung eines Materials, das einen C/C-Verbundwerkstoff umfasst, der mit metallischem Kupfer getränkte Öffnungen hat, als Bremselement in einer Bremsvorrichtung für ein Automobil oder eine Transportmaschine, wobei die Menge an Öffnungen 0,5 bis 25 Volumen-% beträgt und die Menge metallischen Kupfers 15 bis 60 Masse-% des gesamten Materials einnimmt.

2. Verwendung nach Anspruch 1, wobei sich der C/C-Verbundwerkstoff aus einer Garnanhäufung zusammensetzt, in der Garne, die zumindest Bündel aus Kohlenstofffasern und andere Kohlenstoffbestandteile als Kohlenstofffasern enthalten, dreidimensional vereint sind, und diese Garne so eingebunden sind, dass sie sich nicht voneinander lösen.

**Revendications**

1. Utilisation d'un matériau comprenant un composite C/C ayant des ouvertures imprégnées de cuivre métallique comme élément de frein dans un dispositif de freinage pour un véhicule automobile ou une machine de transport, où la quantité des ouvertures est de 0,5% à 25% en volume, et la quantité du cuivre métallique occupe 15% à 60% en masse de tout le matériau.

2. Utilisation selon la revendication 1, dans laquelle le composite C/C est constitué d'un agrégat de fils dans lequel des fils contenant au moins des faisceaux de fibres de carbone et de composants de carbone autres que des fibres de carbone sont tri-dimensionnellement combinés, et ces fils sont intégrés de sorte à ne pas se séparer.

FIG.1

FIG.2

NUMBER OF
ROTATIONS=200rpm

FIG.3

NUMBER OF
ROTATIONS=400rpm

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000081062 A
- EP 0926111 A
- EP 0985647 A2
- JP 2002257168 A
- JP 2000095586 A
- JP 2080639 A